# EUROPÄISCHE PATENTSCHRIFT

(11) **EP 0 840 100 B1**
(45) Veröffentlichungstag und Bekanntmachung des Hinweises auf die Patenterteilung: **11.12.2002**
(21) Anmeldenummer: 97118495.7
(22) Anmeldetag: 24.10.1997
(51) Int. Cl.: G01G 19/00, G01B 11/02

(54) **Selbstbedienungsabfertigungsgerät für ein Poststück**
Self-service check out apparatus for a piece of mail
Dispositif d'enregistrement en libre service pour un pli postal

(30) Priorität: 29.10.1996 DE 19644847
(43) Veröffentlichungstag der Anmeldung: 06.05.1998
(73) Patentinhaber: Mettler-Toledo GmbH, 8606 Greifensee (CH)
(72) Erfinder: Vogel, Karl, 90768 Fürth (DE)

(56) Entgegenhaltungen:
- FR-A- 2 370 593
- GB-A- 2 212 483
- US-A- 3 916 695
- US-A- 5 535 127

## Beschreibung

Die Erfindung betrifft ein Selbstbedienungs-Abfertigungsgerät für ein Poststück, insbesondere Brief oder Päckchen, zur Postgebührenermittlung mit einer Waage zur Gewichtserfassung.

In Postämtern soll dem Postkunden die Abfertigung, d.h. Frankierung, seiner Postsendung durch Selbstbedienung erleichtert werden. Nach dem Stand der Technik waren früher in Postämtern Zeigerwaagen mit Tabellen aufgestellt. An diesen waren die jeweiligen Postgebühren für gängige Sendungen nur umständlich ablesbar.

Nach den heutigen Portogebührenvorschriften wird insbesondere unterschieden
a) hinsichtlich der Poststückart zwischen Brief, Postkarte, Aerogramm und Päckchen,
b) hinsichtlich der Versendungsart zwischen Land-, Luft- und Eilzustellung sowie
c) hinsichtlich des Bestimmungsortes nach Inland, Europa, Welt.

Bei den Briefen wird insbesondere unterschieden zwischen "Standardbrief", "Kompaktbrief", "Großbrief" und "Maxibrief", wobei Parameter für diese Unterscheidung das Gewicht, die Dicke und das Format sind und für diese unterschiedlichen Briefarten unterschiedliche Portogebühren gelten.

Da es für den Postkunden schwierig ist, im Postamt für sein jeweiliges Poststück die richtige Gebühr zu ermitteln, wird in Postämtern im Rahmen eines Pilotprojekts den Postkunden eine Anlage zur Verfügung gestellt, mit der mittels einer Waage das Gewicht des Poststücks, mittels einer Schlitzanordnung die Dicke des Poststücks und mittels einer Schablone das Format des Poststücks ermittelt werden kann. Auch eine solche Anlage gilt für den Postkunden als umständlich in der Handhabbarkeit, da er selbst zahlreiche Handgriffe, Überlegungen und Einstellungen vornehmen muß, um dann schließlich die notwendige Portogebühr angezeigt zu bekommen.

Aufgabe der Erfindung ist es, ein baulich unkompliziertes Gerät der eingangs genannten Art vorzuschlagen, mit dem der Postkunde die Abfertigung eines Poststücks, insbesondere im Hinblick auf dessen Dicke, im Selbstbedienungsbetrieb vornehmen kann.

Erfindungsgemäß ist obige Aufgabe durch die Merkmale des kennzeichnenden Teils des Anspruchs 1 gelöst.

Bei diesem Gerät muß der Postkunde lediglich den Deckel öffnen, das Poststück auf die Auflegeplatte legen und den Deckel schließen. Die Erfassung des Gewichts und der Dicke des Poststücks erfolgt danach automatisch. Der Postkunde muß also nicht vor oder nach Ermittlung des Gewichts sein Poststück durch verschieden breite Schlitze ziehen und dann an einer Tastatur eingeben, welche Dicke die zutreffende ist. Das vom Gerät erfaßte Gewicht und die gleichzeitig vom Gerät erfaßte Dicke lassen sich in einer Elektronik, beispielsweise Mikroprozessor, in der die Postgebühren gespeichert sind, weiterverarbeiten.

Günstig ist auch, daß der Postkunde die Erfassung des Gewichts und der Dicke mit einem einzigen, sinnfälligen Bedienvorgang einleitet, wobei die Auswertung des Gewichts, des Formats und der Dicke des Poststücks praktisch gleichzeitig erfolgt.

Das beschriebene Gerät hat auch den Vorteil, daß es einfach und robust mit wenig mechanischem Aufwand aufgebaut ist, weil insbesondere elektromechanische Sternantriebe für die Dickenerfassung überflüssig sind und eine übliche Waage verwendet werden kann.

In vorteilhafter Ausgestaltung der Erfindung sind zur Formaterkennung des jeweiligen Poststücks an der Auflegeplatte optische Sensoren angeordnet. Entsprechend des jeweiligen Formats des Poststücks werden die optischen Sensoren abgedeckt oder nicht abgedeckt. Der jeweilige Abdeckungszustand wird in der Elektronik weiterverarbeitet. Der Postkunde muß also weder hinsichtlich des Gewichts noch hinsichtlich der Dicke noch hinsichtlich des Flächenformats des Poststücks Eingabetasten betätigen, weil diese Parameter automatisch erfaßt werden.

Das Gerät kann über seine Elektronik an einen die Parameter des jeweiligen Poststücks ausdruckenden Druckers oder direkt an einen Briefmarkenautomaten oder eine Frankiermaschine angeschlossen werden.

In bevorzugter Ausgestaltung der Erfindung schließt der. Deckel die Aufnahmekammer oben ab und die Auflegeplatte ist horizontal angeordnet und die Federmittel wirken in vertikaler Richtung, wobei der Deckel in seiner Stillstellung über das auf die Auflegeplatte gelegte Poststück die Auflegeplatte nach unten drückt. Das Gewicht des jeweiligen Poststücks wirkt dabei entgegen der Federkraft der Federmittel in gleicher Richtung wie die Gewichtserfassung durch die Waage. Dies erleichtert für den Postkunden das Einlegen des Poststücks und das Schließen des Deckels. Es wäre jedoch auch möglich, den Deckel seitlich anzuordnen, wobei dann die ebene Auflegeplatte vertikal steht und die Federmittel horizontal, quer zur Belastungsrichtung der Waage wirken. In diesem Fall wird das Poststück stehend, wobei sich die Fläche seines Formats in vertikaler Richtung erstreckt, in die Aufnahmekammer eingesetzt.

Weitere vorteilhafte Ausgestaltungen der Erfindung ergeben sich aus den Unteransprüchen und der folgenden Beschreibung. In der Zeichnung zeigen:
Figur 1 ein Selbstbedienungs-Abfertigungsgerät in perspektivischer Ansicht,
Figur 2 eine schematische Teil-Innenansicht des Geräts längs der Linie II-II nach Fig.3,
Figur 3 eine schematische Ansicht längs der Linie III-III nach Fig.2,

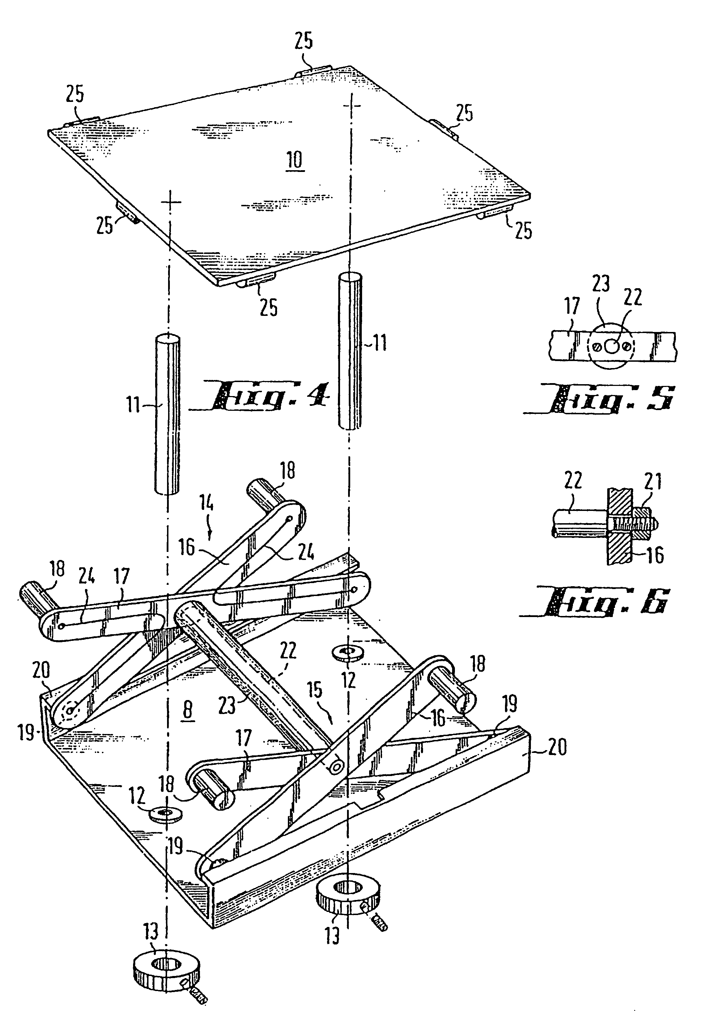

Figur 4 eine Explosionsdarstellung der Auflegeplatte des Geräts und ihrer Lagerung,
Figur 5 ein Detail der Scherenlagerung,
Figur 6 ein weiteres Detail der Scherenlagerung,
Figur 7 den mechanischen Aufbau einer Meßeinrichtung,
Figur 8 eine Aufsicht der Auflegeplatte mit optischen Sensoren,
Figur 9 ein Blockschaltbild des Geräts und
Figur 10 eine Ansicht einer Tastatur des Geräts.

Das Gerät weist eine Waage mit einem Waagenunterteil(1) und einem gewichtsaufnehmenden Waagenoberteil(2) auf. Auf dem Waagenoberteil(2) sitzt eine Aufnahmekammer(3), die durch eine Frontwand(4), eine Rückwand(5) und Seitenwände (6,7) begrenzt ist. Mit den Wänden(4 bis 7) ist eine Zwischenplatte(8) verbunden, die mittels Lagerblöcken(9) auf dem Waagenoberteil(2) aufsitzt.

In der Aufnahmekammer(3) ist eine Auflegeplatte(10) vertikal verschieblich geführt. Die Auflegeplatte(10) trägt hierfür Führungsstäbe(11), die durch Buchsen(12) der Zwischenplatte(8) ragen. Mittels unterhalb der Zwischenplatte(8) den Führungsstäben(11) zugeordneten Stellringen(13) ist die Nullstellung der Auflegeplatte(10) justierbar. Für die sichere Parallelführung der Auflegeplatte(10) zwischen den Wänden(4 bis 7) sind zwei Scheren(14,15) mit je einem äußeren Schenkel(16) und einem inneren Schenkel(17) vorgesehen. An den vier oberen Schenkelenden sind Rollen(18) gelagert, auf denen die Auflegeplatte(10) mit ihrer Unterseite aufliegt. Rollen(19) an den unteren Schenkelenden greifen in U-förmige Führungsprofile(20) der Zwischenplatte(8).

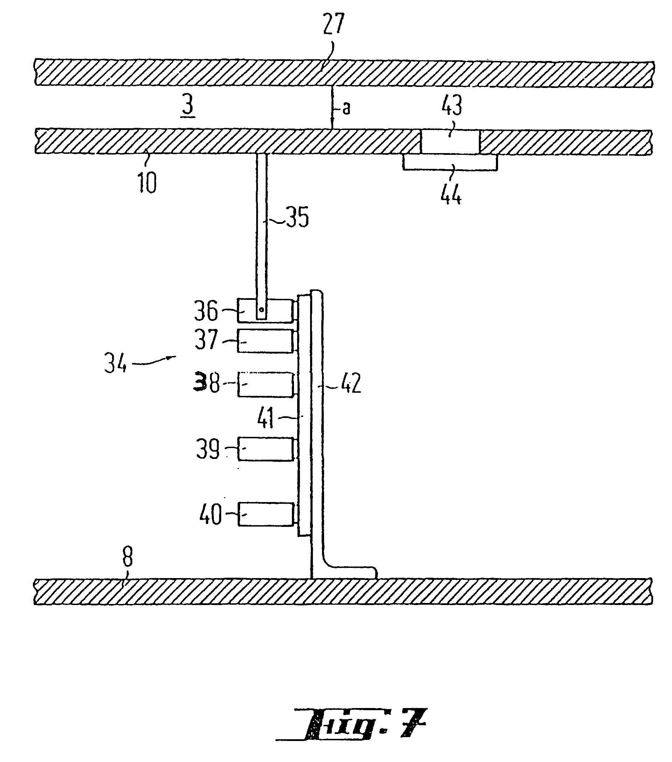

Die beiden Scheren(14,15) sind, um einen Gleichgang zu erreichen, miteinander verbunden. Hierfür sind die äußeren Schenkel(16) mittels Muttern(21) beidseitig an einer Welle(22) befestigt. Die inneren Schenkel(17) sind an einem Rohr(23) festgelegt, in dem sich die Welle(22) erstreckt (vgl. Fig.5).

Zwischen den äußeren Schenkeln(16) und den inneren Schenkeln(17) jeder Schere(14,15) sind als Federmittel Federbügel(24) aus Federstahldraht derart angeordnet, daß sie die Scheren(14,15) zu schließen versuchen, also die Auflegeplatte(10) nach oben drücken. Anstelle der vier Federbügel(24) könnte auch eine zentrale Wendelfeder vorgesehen sein, die einerseits am Rohr(23) angreift und sich andererseits an der Zwischenplatte(8) abstützt. Anstelle der Scheren(14,15) könnten auch andere lineare Führungsmittel für die Auflegeplatte(10), beispielsweise Kugelbüchsen, vorgesehen sein.

Um ein Kratzen der Auflegeplatte(10) an den Wänden(4 bis 7) zu vermeiden, sind an den Rändern der Auflegeplatte (10) Gleitstücke(25) oder Rollen angeordnet.

An einer horizontalen Achse(26) oben an der Rückwand(5) ist ein Deckel(27) klappbar gelagert. Der Deckel(27) besteht im wesentlichen aus einem durchsichtigen Material. Für eine definierte Schließstellung des Deckels (27) ist an der Frontwand(4) ein Anschlagrand(28) gebildet. Am Deckel(27) ist wenigstens ein Magnet(29) vorgesehen, um den Deckel(27) in der Schließstellung zu halten. Ein Schalter(30), beispielsweise Hallsensor, ist vorgesehen, um die Schließstellung des Deckels(27) elektrisch zu erfassen.

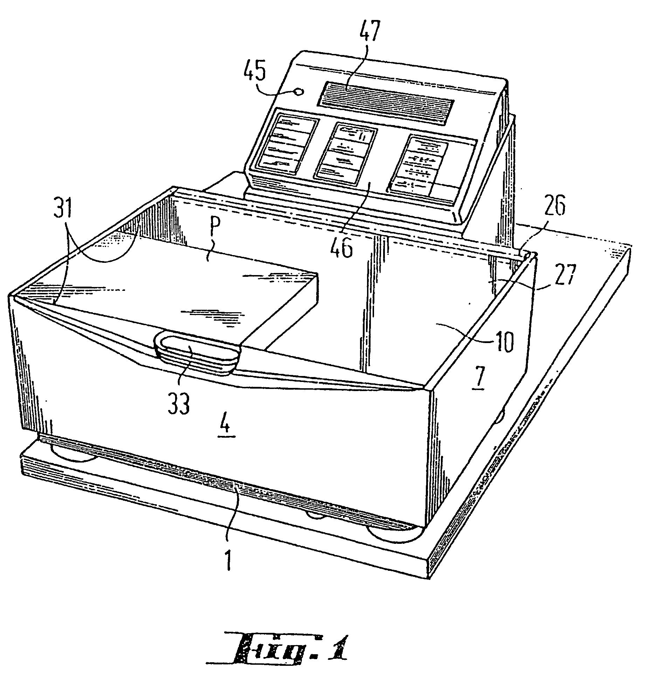

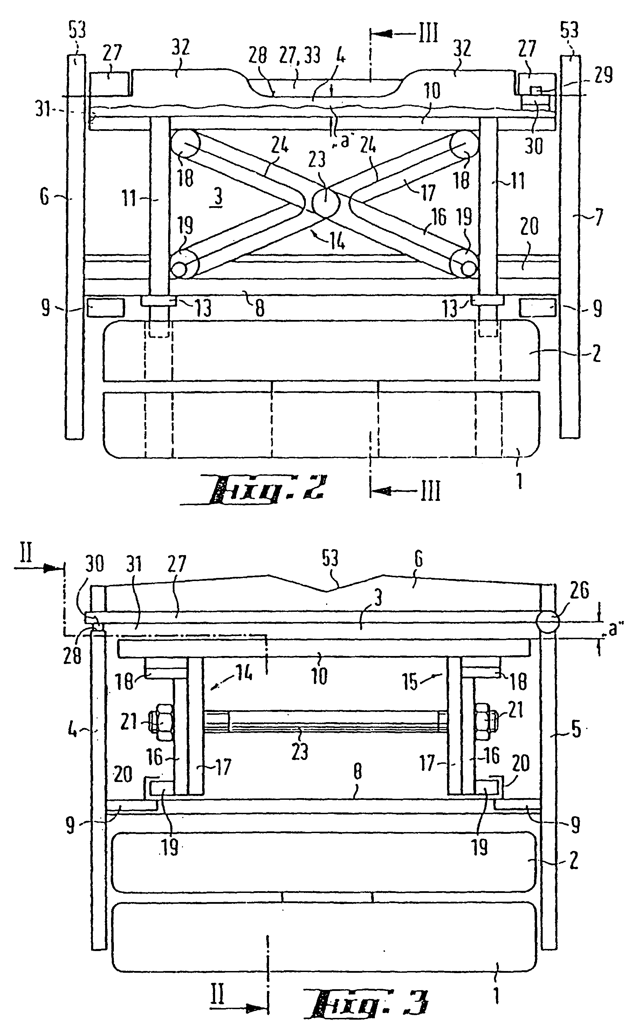

In der Nullstellung liegt die Auflegeplatte(10) im Abstand(a) unterhalb des Anschlagrandes(28). Der Abstand (a) beträgt beispielsweise 3 mm bis 4 mm. Er ist jedenfalls kleiner als die maximale Höhe der Poststückart mit der kleinsten maximalen Höhe, d.h. der Standardbrief mit maximaler Höhe von 5 mm. Infolge des Abstands(a) bilden die Frontwand(4) und die Seitenwände(6,7) schon in der Nullstellung der Auflegeplatte(10) Seitenanschläge (31) für zwei Kanten des Poststücks(P). Neben dem Anschlagrand(28) für den Deckel(27) sind bei der Ausführung nach Figur 2 - nicht der Ausführung nach Figur 1 - an der Frontwand(4) hochgezogene Bereiche(32) vorgesehen. Diese erleichtern das Anlegen des Poststücks, insbesondere wenn dieses gewölbt ist. Der Deckel(27) weist einen die Frontwand(4) frontseitig überragenden Griff(33) auf, welcher bei der Ausführung nach Figur 2 zwischen den hochgezogenen Bereichen(32) der Frontwand(4) vorsteht.

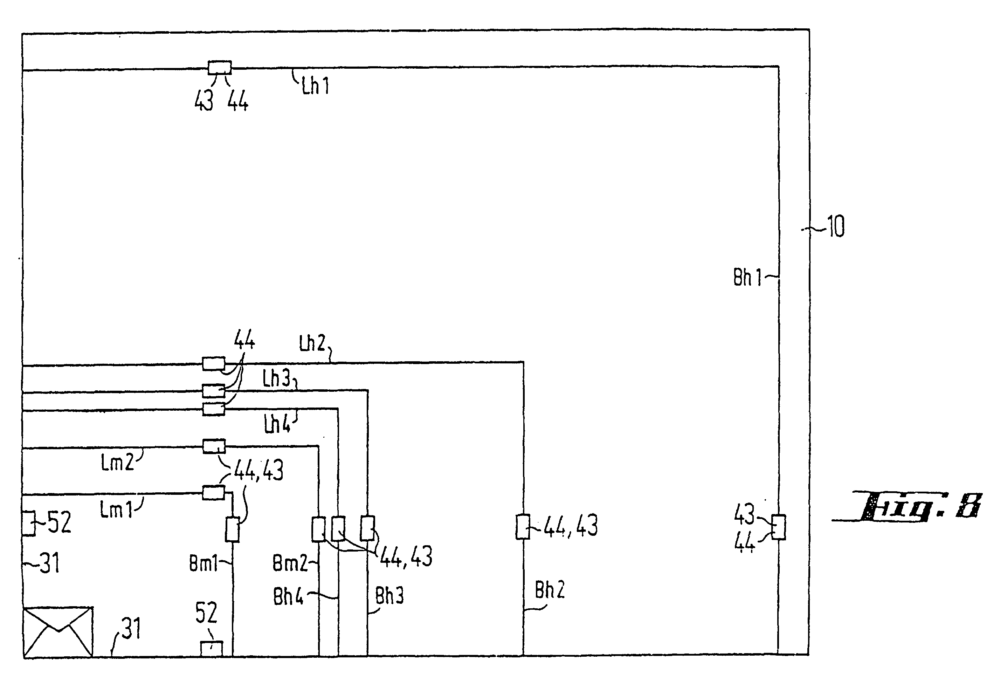

Zwischen der Auflegeplatte(10) und der Zwischenplatte(8) ist eine Längen-Meßeinrichtung(34) angeordnet. Dabei ist unten an der Auflegeplatte(10) eine Meßfahne(35) befestigt, der gestaffelt mehrere Gabellichtschranken(36 bis 40) zugeordnet sind (vgl. Fig.7). In der Nullstellung der Auflegeplatte(10) greift die Meßfahne(35) nur in die Gabellichtschranke(36). Die Gabellichtschranken(37 bis 40) sind entsprechend der maximal zulässigen Höhen 5 mm, 10 mm, 20 mm, 50 mm der einzelnen Briefarten, Standardbrief, Kompaktbrief, Großbrief, Maxibrief gestaffelt. Die Gabellichtschranken(36 bis 40) sind an einer Platine(41) angeordnet, die an einem Winkel(42) befestigt ist, welcher justierbar mit der Zwischenplatte (8) verbunden ist.

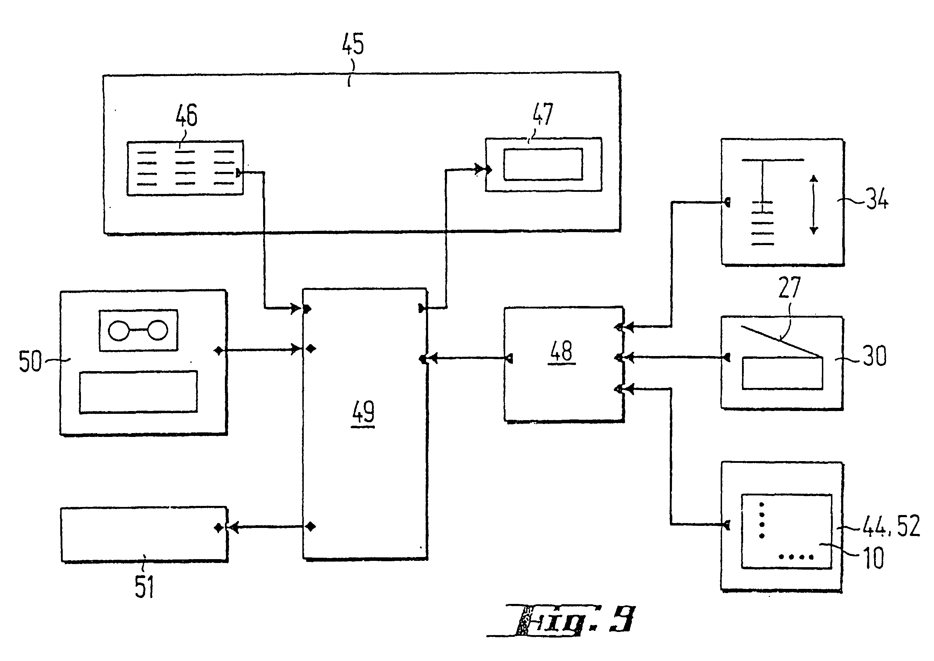

Auf der Auflegeplatte(10) befinden sich Format-Markierungslinien(Lh) für die Höchstlängen und (Bh) für die Höchstbreiten und (Lm) für die Mindestlänge und (Bm) für die Mindestbreite der Briefarten nach den Postvorschriften (vgl. Fig.8). Unter der Voraussetzung, daß ein Brief an die Seitenanschläge(31), also am linken, vorderen Eck angelegt wird, entsprechen die Markierungslinien(Lh1,Bh1) dem zulässigen Höchstformat für Groß- und Maxibriefsendungen. Deren Mindestformat und dem Mindestformat von Kompaktbriefsendungen entsprechen die Markierungslinien(Lm1,Bm1). Die Markierungslinien (Lh2,Bh2) entsprechen dem Höchstformat von Standard- und Kompaktbriefsendungen. Die Markierungslinien(Lm2,Bm2) entsprechen dem Mindestformat von Standardbriefsendungen und Postkarten. Dem Höchstformat von Postkarten entsprechen die Markierungslinien(Lh3,Bh3). Die Markierungslinien (Lh4,Bh4) entsprechen dem C6-Format.

Außerhalb der Markierungslinien weist die Auflegeplatte (10) Durchbrechungen(43) auf, in oder unter denen optische Sensoren(44) angeordnet sind. Jeder der optischen Sensoren arbeitet mit einer Sendediode und einer Empfangsdiode. Sind optische Sensoren durch eine Briefsendung abgedeckt, dann geben diese ein entsprechendes Signal an eine weiter unten näher beschriebene Auswerteschaltung.

Weitere optische Sensoren(52) sind nahe bei den Seitenanschlägen(31) angeordnet. Diese dienen der Erkennung, ob das Poststück direkt in die vordere linke Ecke gelegt ist. Ist dies nicht der Fall, dann wird von der unten näher beschriebenen Anzeigeeinrichtung(47) dem Postkunden eine entsprechende Information gegeben, so daß er sein Poststück an den Seitenanschlägen(31) ausrichten kann. Es kann hierfür auch ein einziger Sensor in der linken vorderen Ecke der Auflegeplatte(10) genügen.

Figur 9 zeigt ein Blockschaltbild einer Elektronik. Dem beschriebenen Gerät ist eine Bedieneinheit(45) zugeordnet, die eine Tastatur(46) und eine Anzeigeeinrichtung(47) aufweist. An einen Sensorprozessor (48) sind die der Dicke des Poststücks(P) entsprechenden Signale der Meßeinrichtung(34), das den Schließzustand des Deckels(27) anzeigende Signal des Schalters(30) und die Signale der Formaterkennung der optischen Sensoren(44 und 52) gelegt. Der Sensorprozessor(48) ist an eine zentrale Prozessoreinheit(49) (CPU) gelegt. Mit dieser sind auch die Tastatur(46) und die Anzeigeeinrichtung(47) verbunden. Außerdem erhält die Prozessoreinheit(49) Gewichtssignale von einer Elektronik (50) der Waage(1,2). Ausgangsseitig kann die Prozessoreinheit (49) außer mit der Anzeigeeinrichtung(47) auch mit einem Drucker oder Briefmarkenautomaten oder Frankiermaschine (51) verbunden sein.

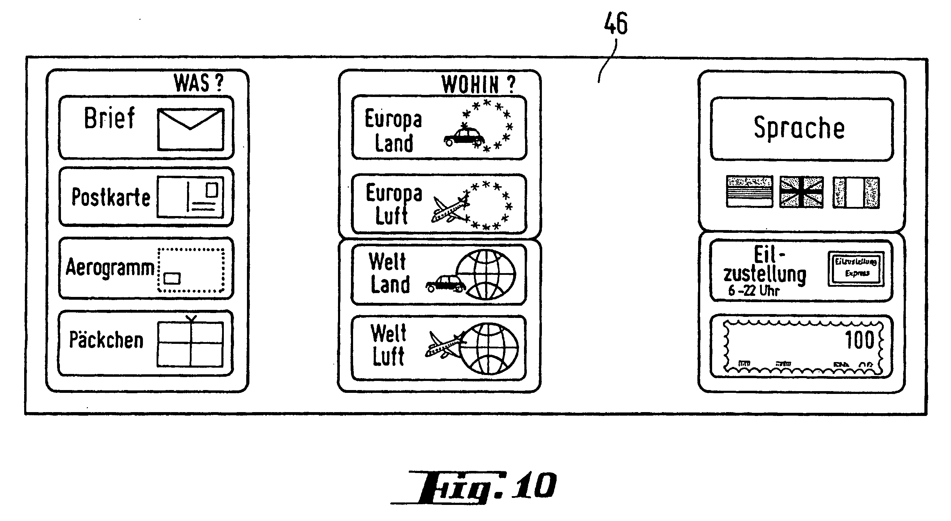

Eine vom Benutzer einfach zu bedienende Tastatur(46) ist in Figur 10 gezeigt. Der Benutzer muß bei der Bedienung der Tastatur(46) nur eingeben, ob es sich bei seinem Poststück um einen Brief, eine Postkarte, ein Aerogramm oder ein Päckchen handelt, ob er Eilzustellung wünscht und welches bei einer ins Ausland gerichteten Sendung die Bestimmungsregion ggf. mit der gewünschten Versandart (Landversand oder Luftversand) ist. Außerdem steht dem Benutzer eine Sprachwahltaste für die Wahl der Sprache der Anzeigeeinrichtung und gegebenenfalls eine Taste "stilisierte Briefmarke" zur Verfügung, mit der er einen Befehl zur Übertragung des ermittelten Portos auf den Drucker, Briefmarkenautomat oder Frankiermaschine(51) geben kann. Der Postkunde muß nicht entscheiden, um welche Briefart (Standardbrief, Kompaktbrief, Großbrief oder Maxibrief) es sich bei seinem Poststück handelt. Dies ermittelt das Gerät selbsttätig. Im Endergebnis wird dem Postkunden an der Anzeigeeinrichtung(47) die für sein Poststück nötige Gebühr angezeigt und/oder vom Drucker ausgegeben, oder es wird ein Briefmarkenautomat oder eine Frankiermaschine auf die nötige Postgebühr eingestellt.

Für den Postkunden ist die Benutzung des beschriebenen Geräts sehr einfach und sinnfällig. Er muß für die Ermittlung der Postgebühr seines Poststücks lediglich den Deckel(27) öffnen, das Poststück an die Seitenanschläge (31) anlegen und den Deckel(27) schließen.

Beim Auflegen des Poststücks drückt dessen Gewicht die Auflegeplatte(10) entgegen der Kraft der Federmittel(24) nach unten. Dies ist günstig, weil dadurch das Schließen des Deckels(27) erleichtert ist, der Deckel(27) bei höheren Sendungen also nicht wesentlich weiter als bei weniger hohen Sendungen gegen die Kraft der Federmittel (24) niedergedrückt werden muß. Das Eigengewicht des Deckels(27) kann so bemessen sein, daß er ohne besonderen, vom Postkunden auszuübenden Druck auf den Anschlagrand(28) trifft und damit den Schalter(30) betätigt. Es ist dabei durch Bemessung der Federkennlinie der Federmittel(24) allerdings sicherzustellen, daß die Auflegeplatte(10) durch das Gewicht des jeweiligen Poststücks nur - wenigstens geringfügig - weniger als die gewichtsabhängige zulässige Dicke des Poststücks niedergedrückt wird. Nach derzeitigen Postvorschriften dürfen Poststücke mit einem Gewicht von 20 g 5 mm dick sein. Poststücke mit einem Gewicht von 50 g dürfen 10 mm dick sein. Poststücke mit einem Gewicht von 500 g dürfen 20 mm dick sein. Poststücke mit einem Gewicht von 1000 g dürfen 50 mm dick sein. Dementsprechend muß bei diesen Gewichten die Absenkung der Auflegeplatte(10) infolge des Gewichts pro Stück um wenigstens 2 mm kleiner sein.

Da der ebene Deckel(27) in seiner Schließstellung parallel zur Auflegeplatte(10) liegt, das Poststück in seiner Dicke also zwischen zwei parallelen Flächen liegt, wobei es durch die Federmittel(24) und durch den in seiner Schließstellung mittels des Magneten(29) fixierten Deckels(27) flächig unter einem gewissen Preßdruck liegt, werden einerseits Luft aus dem jeweiligen Kuvert ausgedrückt, Eselsohren geradegerichtet und Wölbungen begradigt, so daß es nicht zu einer falschen - zu großen - Dickenmessung kommt. Andererseits werden jedoch auch zonale Dickenvergrößungen des Poststücks, die von einem in das Kuvert eingelegten Gegenstand, beispielsweise Kugelschreiber, stammen, richtig erfaßt.

Das Gewicht der auf den Waagenoberteil(2) aufgesetzten Bauteile ist austariert. Nach dem Schließen des Deckels (27) erfaßt die Prozessoreinheit(49) das Gewicht des Poststücks. Es kann dabei dem Benutzer über die Anzeigeeinrichtung(47) eine Information dahingehend gegeben werden, daß er den Deckel(27) bzw. das Gerät nicht mehr berühren soll.

Bei geschlossenem Deckel(27) drückt dieser über das jeweilige Poststück die Auflegeplatte(10) entsprechend der Dicke des Poststücks nieder. Diese Absenkung der Auflegeplatte(10) wird von der Meßeinrichtung(34) erfaßt und in der Prozessoreinheit(49) verarbeitet. Günstig dabei ist, daß die Gewichtserfassung und die Dickenerfassung praktisch gleichzeitig erfolgen, so daß der Postkunde keine zusätzlichen Handgriffe durchführen muß. Vorteilhaft ist auch, daß für die Gewichtsmessung und die Dickenmessung der Postkunde nicht getrennte Handgriffe durchführen muß und er sein Poststück(P) (vgl. Fig.1) durch den Deckel(27) hindurch sieht.

Günstig ist bei dem beschriebenen Gerät auch, daß der bauliche Aufwand gering ist, weil keine motorischen Antriebe und keine zusätzlichen Transportbewegungen für die Dickenmessung erforderlich sind.

Beim Schließen des Deckels(27) erfolgt gleichzeitig mit der Gewichtsermittlung durch die Waage(1,2) und der Dickenmessung mit der Meßeinrichtung(34) auch die Formatermittlung des Poststücks mit den optischen Sensoren(44), wenn das Poststück(P) richtig eingelegt ist, was die optischen Sensoren(52) feststellen. Der Postkunde muß also auch für die Formaterkennung von Briefsendungen keine zusätzlichen Handgriffe und/oder Eingaben vornehmen. Allein durch den Abdeckungszustand oder Nichtabdeckungszustand der optischen Sensoren(44) der Auflegeplatte(10) durch das jeweilige Poststück(P) wird dessen Format erfaßt und in der Prozessoreinheit(49) verarbeitet, in der die jeweiligen Postgebühren gespeichert sind.

Das Gerät ist wegen seiner kastenförmigen Gestalt leicht zu pflegen und auch gegen mutwillige Zerstörungen sicher. Das Gerät ist auch einfach an unterschiedliche oder sich ändernde Postvorschriften anpaßbar. Durch entsprechende Auslegung der Meßeinrichtung(34), speziell der Lage der Gabellichtschranken(36 bis 40), ist eine Anpassung an Dickenvorschriften möglich. Durch Anordnung der optischen Sensoren(44) ist eine Anpassung an Formatvorschriften möglich.

Es gelten nach heutigen Postvorschriften auch besondere Vorschriften für die Versendung von rollenförmigen Verpackungen. Um das Gerät nicht für diese seltene Versendungsform aufwendig auszulegen und dennoch das Gewicht eines rollenförmigen Poststücks zu erfassen, sind an den Seitenwänden(6) V-förmige oder rechteckige Ausschnitte(53) vorgesehen, in die sich eine Rolle einlegen läßt. Damit ist zwar keine Durchmessererfassung und keine Längenerfassung einer Verpackungsrolle möglich. Jedoch wird durch Einlegen der Rolle in die V-förmigen Ausschnitte(53) mittels der Waage(1,2) das Gewicht der Rolle ermittelt. Es wäre jedoch auch möglich, das Gerät so aufzubauen, daß es auch den Durchmesser (Dicke) der Rolle und deren Länge erfaßt.

Das Gerät ist vorzugsweise so dimensioniert, daß seine Auflegeplatte(10) so groß ist, daß auf sie Großbriefe bzw. Maxibriefe und damit auch Päckchen aufgelegt werden können, die dieses Format nicht wesentlich überschreiten. Es ist jedoch auch eine Versendungsart als "Päckchen" oder "Maxibrief Ausland" zulässig, wobei das Format dieser Sendungen wesentlich größer sein darf als das Format von Maxibriefen Inland. Das Gerät so auszulegen, daß auch die - seltenen - größten zulässigen Päckchen oder Maxibriefe Ausland von der Auflegeplatte(10) aufgenommen werden können, wäre zwar ohne weiteres möglich, jedoch aufwendig. Das Gewicht von zulässigen, extrem großen Sendungen läßt sich einfach dadurch erfassen, daß diese Sendungen auf den geschlossenen Deckel(27) und/oder die Seitenwände(6) aufgelegt werden.

## Patentansprüche

1. Gerät zur Versandgebührenermittlung für Poststücke, insbesondere Briefe oder Päckchen, mit einer zur Ermittlung des Gewichts der zu versendenden Poststücke dienenden Waage, die ein zu ihrer stationären Aufstellung dienendes feststehendes Teil und ein daran gelagertes, das Gewicht der zu versendenden Poststücke aufnehmendes Teil aufweist, **dadurch gekennzeichnet, daß** an dem gewichtsaufnehmenden Teil (2) eine zwischen einem geöffneten Zustand und einem geschlossenen Zustand verstellbare Aufnahmekammer (3) für das jeweils zu versendende Poststück (P) angeordnet ist, in deren geschlossenem Zustand das in sie eingelegte Poststück (P) zwischen zwei sich quer zu dessen Dickenrichtung erstreckenden Wänden (10, 27) aufgenommen ist, die in der Dickenrichtung relativ zueinander entgegen einer im Sinne einer gegenseitigen Annäherung wirkenden Rückstellkraft beweglich sind und in deren geöffnetem Zustand die beiden Wände (10, 27) in einem das Einlegen und Entnehmen des Poststücks (P) erlaubenden Maß voneinander entfernt sind, und daß eine Meßeinrichtung (34) vorgesehen ist, die den infolge des Einlegens des Poststücks (P) im geschlossenen Zustand der Aufnahmekammer (3) sich einstellenden Abstand zwischen den beiden Wänden (10, 27) als die Dicke des Poststücks (P) anzeigenden Meßwert erfaßt.

2. Gerät nach Anspruch 1, **dadurch gekennzeichnet, daß** die eine Wand durch einen zwischen der Öffnungsstellung und der Schließstellung verlagerbaren Deckel (27) der Aufnahmekammer (3) und die andere Wand durch eine in Gegenüberstellung zu dem in seiner Schließstellung befindlichen Deckel (27) angeordnete Auflegeplatte (10) für das Poststück (P) gebildet ist, welche über die, die Auflegeplatte (10) in Richtung auf den Deckel (27) drückende, die Rückstellkraft liefernde Federmittel beweglich gelagert ist.

3. Gerät nach Anspruch 2, **dadurch gekennzeichnet, daß** der Deckel (27) die Aufnahmekammer (3) oben abschließt und die Auflegeplatte (10) horizontal angeordnet ist und die Federmittel (24) in vertikaler Richtung in Richtung der Gewichtserfassung wirken und der Deckel (27) in seiner Schließstellung über das auf die Auflegeplatte (10) gelegte Poststück (P) die Auflegeplatte (10) nach Maßgabe der Dicke des Poststücks (P) nach unten drückt.

4. Gerät nach Anspruch 2 oder 3, **dadurch gekennzeichnet, daß** der Deckel (27 um eine horizontale Achse (26) hinten an der Aufnahmekammer (3) klappbar gelagert ist und vorn an der Aufnahmekammer (3) ein Anschlagrand (28) für eine definierte Schließstellung des Deckels (27) ausgebildet ist.

5. Gerät nach einem der Ansprüche 2 bis 4, **dadurch gekennzeichnet, daß** der Deckel (27) in seiner Schließstellung mittels wenigstens eines Magneten (29) gehalten ist.

6. Gerät nach einem der Ansprüche 2 bis 5, **dadurch gekennzeichnet, daß** dem Deckel (27) ein in dessen Schließstellung ansprechender Schalter (30) zugeordnet ist.

7. Gerät nach einem der Ansprüche 2 bis 6, **dadurch gekennzeichnet, daß** der Deckel (27) plattenförmig eben gestaltet ist und in seiner Schließstellung parallel zur Auflegeplatte (10) steht.

8. Gerät nach einem der Ansprüche 2 bis 7, **dadurch gekennzeichnet, daß** der Deckel (27) wenigstens teilweise aus durchsichtigem Material besteht.

9. Gerät nach einem der Ansprüche 2 bis 8, **dadurch gekennzeichnet, daß** bei geöffnetem Deckel (27) die Auflegeplatte (10) zum Auflegen eines Poststücks (P) freiliegt.

10. Gerät nach einem der Ansprüche 2 bis 9, **dadurch gekennzeichnet, daß** die Auflegeplatte (10) durch Linear-Führungsmittel in der Aufnahmekammer (3) geführt ist.

11. Gerät nach einem der Ansprüche 2 bis 10, **dadurch gekennzeichnet, daß** die Auflegeplatte (10) mittels zwei Scheren (14, 15) in der Aufnahmekammer (3) geführt ist, wobei die Schwenkungen der Scheren (14, 15) miteinander gekoppelt (22, 23) sind.

12. Gerät nach Anspruch 11, **dadurch gekennzeichnet, daß** an den vier der Auflegeplatte (10) zugewandten Enden der Scheren (14, 15) Rollen (18) angeordnet sind, auf denen die Auflegeplatte (10) aufliegt.

13. Gerät nach Anspruch 11 oder 12, **dadurch gekennzeichnet, daß** an den vier der Auflegeplatte (10) abgewandten Enden der Scheren (14, 15) Rollen (19) angeordnet sind, die in U-förmigen Führungsprofilen (20) der Aufnahmekammer (3) geführt sind.

14. Gerät nach einem der Ansprüche 2 bis 13, **dadurch gekennzeichnet, daß** die Aufnahmekammer (3) eine parallel zur Ebene der Auflegeplatte (10) angeordnete Zwischenplatte (8) aufweist, die auf das gewichtserfassende Teil (2) der Waage aufgesetzt ist, wobei Wände (4 bis 7) den gewichtserfassenden Teil (2) der Waage außen seitlich übergreifen.

15. Gerät nach einem der Ansprüche 2 bis 14, **dadurch gekennzeichnet, daß** an der Auflegeplatte (10) Gleitstücke (25) oder Rollen angeordnet sind, die an Wänden (4 bis 7) der Aufnahmekammer (3) anliegen.

16. Gerät nach einem der Ansprüche 2 bis 15, **dadurch gekennzeichnet, daß** die Auflegeplatte (10) mittels wenigstens eines Führungsstabes (11) an der Aufnahmekammer (3) gelagert ist, wobei an dem Führungsstab (11) ein Stellglied (13) für die Einstellung der Nullstellung der Auflegeplatte (10) vorgesehen ist.

17. Gerät nach einem der Ansprüche 2 bis 16, **dadurch gekennzeichnet, daß** die Auflegeplatte (10) in ihrer Nullstellung wenigstens um einen Abstand (a) gegenüber einem Rand einer Frontwand (4) und einer Seitenwand (6) der Aufnahmekammer (3) niedersteht, um einen Seitenanschlag (31) für das Poststück (P) zu bilden.

18. Gerät nach einem der Ansprüche 2 bis 17, **dadurch gekennzeichnet, daß** neben einem Anschlagrand (28) für die Schließstellung des Deckels (27) wenigstens ein hochgezogener Bereich (32) besteht.

19. Gerät nach einem der vorhergehenden Ansprüche, **dadurch gekennzeichnet, daß** an Seitenwänden (6, 7) der Aufnahmekammer (3) letztere (27) in ihrer Schließstellung überragende V-förmige Ausschnitte (53) zum Einlegen einer Verpakkungsrolle ausgebildet sind.

20. Gerät nach einem der vorhergehenden Ansprüche, **dadurch gekennzeichnet, daß** die Federkraft der Federmittel (24) derart bemessen ist, daß sich die Auflegeplatte (10) unter dem Gewicht des Poststücks (P) absenkt und daß die Federkennlinie derart bemessen ist, daß sich die Auflegeplatte (10) unter dem Gewicht des Poststücks (P) nur um eine Strecke absenkt, die kleiner ist als die nach Postvorschrift größte zulässige Dicke der jeweiligen Poststückart.

21. Gerät nach einem der vorhergehenden Ansprüche, **dadurch gekennzeichnet, daß** die Meßeinrichtung (34) Lichtschranken (36 bis 40) und eine Meßfahne (35) aufweist, wobei die Meßfahne (35) und die Lichtschranken (36 bis 40) entsprechend der Dicke des Poststücks (P) relativ zueinander beweglich sind.

22. Gerät nach Anspruch 21, **dadurch gekennzeichnet, daß** die Lichtschranken (36 bis 40) im Abstand der maximal zulässigen Dicken der Poststückarten angeordnet sind.

23. Gerät nach einem der vorhergehenden Ansprüche, **dadurch gekennzeichnet, daß** zur Formaterkennung des jeweiligen Poststücks (P) an einer der relativ zueinander beweglichen Wände (10, 27) optische Sensoren (44) angeordnet sind.

24. Gerät nach einem der vorhergehenden Ansprüche, **dadurch gekennzeichnet, daß** im Bereich eines Seitenanschlages (31) des Poststücks (P) wenigstens ein weiterer Sensor (52) an einer der relativ zueinander beweglichen Wände (10) angeordnet ist, um die richtige Ausrichtung des Poststücks (P) auf dieser beweglichen Wand (10) zu erfassen.

25. Gerät nach einem der vorhergehenden Ansprüche, **dadurch gekennzeichnet, daß** die Waage (2), die Meßeinrichtung (34) für die Dicke und ggf. der Schalter (30) für die Schließstellung des Deckels (27) sowie ggf. die optischen Sensoren (44, 52) für die Formaterkennung an eine Elektronik (46 bis 50) angeschlossen sind, die mit einer Eingabetastatur (46) und einer Anzeigeeinrichtung (47) in Verbindung steht und die aus dem Gewicht und der Dicke und ggf. dem Format des jeweiligen Poststücks (P) die Postgebühr ermittelt.

## Claims

1. A device for determining charges for postal items, in particular letters or packages, having scales for determining the weight of the postal item to be sent, which has a fixed part serving as its stationary assembly and a part mounted thereon, recording the weight of the postal item to be sent, **characterised in that** a receiving chamber (3) for each postal item (P) to be sent is arranged on the part (2) recording the weight adjustable between an open state and a closed state, whereby in the closed state the postal item (P) inserted into the former is taken up between two walls (10, 27) extending transversely to its direction of thickness, which can be moved in the direction of thickness relative to one another against a restoring force acting in the direction of reciprocal approach, and whereby both walls (10, 27) are spaced apart from one another in the open state to an extent allowing the postal item (P) to be inserted and removed, and **in that** a measuring instrument (34) is provided which detects the adjustable distance between both walls (10, 27), as a result of the of the postal item (P) being inserted when the receiving chamber (3) is in the closed state, as a measured value indicating the thickness of the postal item (P).

2. The device as claimed in Claim 1, **characterised in that** one wall is formed by a cover (27) of the receiving chamber (3) which can be shifted between the open position and the closed position and the other wall is formed by a feed plate (10) arranged in contrast to the cover (27) located in its closed position for the postal item (P), which is mounted movably via the resilient means pressing the feed plate (10) in the direction of the cover (27) and furnishing the restoring force.

3. The device as claimed in Claim 2, **characterised in that** the cover (27) closes off the receiving chamber (3) at the top and the feed plate (10) is arranged horizontally and the resilient means (24) have a vertical effect in the direction of the weight recording and the cover (27), when in its closed position, presses the feed plate (10) downwards according to the thickness of the postal item (P) by means of the postal item (P) laid on the feed plate (10).

4. The device as claimed in Claim 2 or 3, **characterised in that** the cover (27) is mounted so as to hinge about a horizontal axis (26) at the rear on the receiving chamber (3), and a stop edge (28) for defining a closed position of the cover (27) is formed at the front on the receiving chamber (3).

5. The device as claimed in any one of Claims 2 to 4, **characterised in that** the cover (27) is held in its closed position by means of at least one magnet (29).

6. The device as claimed in any one of Claims 2 to 5, **characterised in that** the cover (27) is assigned a switch (30) responsive in its closed position.

7. The device as claimed in any one of Claims 2 to 6, **characterised in that** the cover (27) is designed as a flat plate and in its closed position is parallel to the feed plate (10).

8. The device as claimed in any one of Claims 2 to 7, **characterised in that** the cover (27) at least partially comprises transparent material.

9. The device as claimed in any one of Claims 2 to 8, **characterised in that** when the cover (27) is open the feed plate (10) is free for a postal item (P) to be laid on.

10. The device as claimed in any one of Claims 2 to 9, **characterised in that** the feed plate (10) is guided by linear guide means in the receiving chamber (3).

11. The device as claimed in any one of Claims 2 to 10, **characterised in that** the feed plate (10) is guided in the receiving chamber (3) by means of two scissor-type stays (14, 15), whereby the horizontal swinging movements of the scissor-type stays (14, 15) are coupled to one another (22, 23).

12. The device as claimed in Claim 11, **characterised in that** rollers (18), supporting the feed plate (10), are arranged on the four ends of the scissor-type stays (14, 15) facing the feed plate (10) ends.

13. The device as claimed in Claim 11 or 12, **characterised in that** rollers (19), guided in U-shaped guide profiles (20) of the receiving chamber (3) are arranged on the four ends of the scissor-type stays (14, 15) facing the feed plate (10) ends.

14. The device as claimed in any one of Claims 2 to 13, **characterised in that** the receiving chamber (3) has an intermediate plate (8) positioned parallel to the plane of the feed plate (10), which is set on the part (2) of the scales assessing the weight, whereby walls (4 to 7) overlap the part (2) of the scales assessing the weight externally and laterally.

15. The device as claimed in any one of Claims 2 to 14, **characterised in that** sliding blocks (25) or rollers, which rest on walls (4 to 7) of the receiving chamber (3), are arranged on the feed plate (10).

16. The device as claimed in any one of Claims 2 to 15, **characterised in that** the feed plate (10) is mounted by means of at least one guide rod (11) on the receiving chamber (3), with an actuator (13) for setting the neutral position of the feed plate (10) being provided on the guide rod (11).

17. The device as claimed in any one of Claims 2 to 16, **characterised in that**, when in its neutral position, the feed plate (10) is lower at least by a distance (a) relative to an edge of a front wall (4) and a side wall (6) of the receiving chamber (3) to form a side stop (31) for the postal item (P).

18. The device as claimed in any one of Claims 2 to 17, **characterised in that** there is at least one raised area (32) apart from a stop edge (28) for the closed position of the cover (27).

19. The device as claimed in any one of the foregoing claims, **characterised in that** on side walls (6, 7) of the receiving chamber (3) walls (27) are designed as projecting V-shaped sections (53) to receive a packaging roll, in their closed position.

20. The device as claimed in any one of the foregoing claims, **characterised in that** the resilience of the resilient means (24) is such that the feed plate (10) drops under the weight of the postal item (P) and the resilience characteristic is such that the feed plate (10) drops under the weight of the postal item (P) only by a distance which is less than the greatest permissible thickness of each type of postal item according to postal regulations.

21. The device as claimed in any one of the foregoing claims, **characterised in that** the measuring instrument (34) has light barriers (36 to 40) and a measuring flag (35), whereby the measuring flag (35) and the light barriers (36 to 40) can move relative to one another corresponding to the thickness of the postal item (P).

22. The device as claimed in Claim 21, **characterised in that** the light barriers (36 to 40) are arranged at a distance of the maximum permissible thicknesses of the types of postal item.

23. The device as claimed in any one of the foregoing claims, **characterised in that** optical sensors (44) are arranged for the purpose of recognising the format of each postal item (P) on one of the walls (10, 27) which can move relative to one another.

24. The device as claimed in any one of the foregoing claims, **characterised in that** at least one more sensor (52) is arranged in the region of a side stop (31) of the postal item (P) on one of the walls (10) which can move relative to one another, for detecting the correct alignment of the postal item (P) on this movable wall (10).

25. The device as claimed in any one of the foregoing claims, **characterised in that** the scales (2), the measuring instrument (34) for the thickness and optionally the switch (30) for the closed position of the cover (27), and optionally the optical sensors (44, 52) for recognition of format are connected to an electronic unit (46 to 50), which is connected to an input keyboard (46) and a display device (47) and determines the postal fee from the weight and the thickness and optionally the format of the respective postal item (P).

## Revendications

1. Appareil pour calculer les frais d'expédition pour des envois postaux, en particulier des lettres ou petits paquets, équipé d'une balance servant à déterminer le poids des envois postaux à expédier, qui présente une partie fixe servant à son installation immobile et une partie montée dessus et recevant le poids des envois postaux à expédier, **caractérisé en ce que** sur la partie (2) recevant le poids est disposée une chambre de réception (3) pouvant être réglée entre un état ouvert et un état fermé pour l'envoi postal (P) à expédier, laquelle réceptionne, lorsqu'elle est fermée, l'envoi postal (P) placé dedans entre deux parois (10, 27) s'étendant transversalement au sens d'épaisseur de l'envoi, lesquelles parois sont mobiles dans le sens de l'épaisseur l'une par rapport à l'autre contrairement à une force de rappel agissant dans le sens d'un rapprochement réciproque et, lorsqu'elles sont ouvertes, les deux parois (10, 27) sont éloignées l'une de l'autre dans une proportion permettant l'insertion et l'enlèvement de l'envoi postal (P), et **en ce qu'**il est prévu un dispositif de mesure (34) qui enregistre la valeur mesurée qui indique l'espacement entre les deux parois (10, 27) obtenu du fait de l'insertion de l'envoi postal (P) lorsque la chambre de' réception (1) est fermée en tant qu'épaisseur de l'envoi postal (P).

2. Appareil selon la revendication 1, **caractérisé en ce qu'**une paroi est formée par un couvercle (27) de la chambre de réception (3), qui peut être déplacé entre la position d'ouverture et la position de fermeture et l'autre paroi par un plaque d'appui (10) pour l'envoi postal (P) disposée en face du couvercle (27) se trouvant dans sa position de fermeture, laquelle plaque est montée de façon mobile par les moyens élastiques pressant la plaque d'appui (10) en direction du couvercle (27) et fournissant la force de rappel.

3. Appareil selon la revendication 2, **caractérisé en ce que** le couvercle (27) ferme la chambre de réception (3) en haut et la plaque d'appui (10) est disposée horizontalement et les moyens élastiques (24) agissent dans le sens vertical en direction de l'enregistrement du poids et le couvercle (27) appuie dans sa position de fermeture la plaque d'appui (10) vers le bas selon l'épaisseur de l'envoi postal (P) au moyen de l'envoi postal (P) posé sur la plaque d'appui (10).

4. Appareil selon la revendication 2 ou 3, **caractérisé en ce que** le couvercle (27) est logé de façon à pouvoir basculer autour d'un axe (26) horizontal à l'arrière sur la chambre de réception (3) et un bord de butée (28) est réalisé à l'avant sur la chambre de butée (3) pour une position de fermeture définie du couvercle (27).

5. Appareil selon l'une quelconque des revendications 2 à 4, **caractérisé en ce que** le couvercle (27) est maintenu dans sa position de fermeture au moyen d'au moins un aimant (29).

6. Appareil selon l'une quelconque des revendications 2 à 5, **caractérisé en ce qu'**un interrupteur (30) se déclenchant dans sa position de fermeture est attribué au couvercle (27).

7. Appareil selon l'une quelconque des revendications 2 à 6, **caractérisé en ce que** le couvercle (27) est conçu en forme de plaque plane et est parallèle à la plaque d'appui (10) dans sa position de fermeture.

8. Appareil selon l'une quelconque des revendications 2 à 7, **caractérisé en ce que** le couvercle (27) est au moins en partie à base de matériau transparent.

9. Appareil selon l'une quelconque des revendications 2 à 8, **caractérisé en ce que** la plaque d'appui (10) est dégagée pour la pose d'un envoi postal (P) avec le couvercle (27) ouvert.

10. Appareil selon l'une quelconque des revendications 2 à 9, **caractérisé en ce que** la plaque d'appui (10) est guidée par des moyens de guidage linéaires dans la chambre de réception (3).

11. Appareil selon l'une quelconque des revendications 2 à 10, **caractérisé en ce que** la plaque d'appui (10) est guidée au moyen de deux ciseaux (14, 15) dans la chambre de réception (3), les oscillations des ciseaux (14, 15) étant couplées entre elles (22, 23).

12. Appareil selon la revendication 11, **caractérisé en ce que** des galets (18), sur lesquels la plaque d'appui (10) repose, sont disposés sur les quatre extrémités, tournées vers la plaque d'appui (10), des ciseaux (14, 15).

13. Appareil selon la revendication 11 ou 12, caractérisé en des galets (19), qui sont guidés dans des profilés de guidage (20) en forme de U de la chambre de réception (3), sont disposés sur les quatre extrémités, opposées à la plaque d'appui (10), des ciseaux (14, 15).

14. Appareil selon l'une quelconque des revendications 2 à 13, **caractérisé en ce que** la chambre de réception (3) présente une plaque intermédiaire (8) disposée parallèlement au plan de la plaque d'appui (10), qui est posée sur la partie (2) de la balance enregistrant le poids, les parois (4 à 7) recouvrant à l'extérieur sur le côté la partie (2) de la balance enregistrant le poids.

15. Appareil selon l'une quelconque des revendications 2 à 14, **caractérisé en ce que** des pièces coulissantes (25) ou des galets, qui s'appuient sur des parois (4 à 7) de la chambre de réception (3), sont disposés sur la plaque d'appui (10).

16. Appareil selon l'une quelconque des revendications 2 à 15, **caractérisé en ce que** la plaque d'appui (10) est logée sur la chambre de réception (3) au moyen d'au moins une barre de guidage (11), un actionneur (13) étant prévu sur le bâton de guidage (11) pour le réglage de la position neutre de la plaque d'appui (10).

17. Appareil selon l'une quelconque des revendications 2 à 16, **caractérisé en ce que** la plaque d'appui (10) est disposée dans sa position neutre à un niveau inférieur d'au moins un espacement (a) par rapport à un bord d'une paroi frontale (4) et une paroi latérale (6) de la chambre de réception (3), afin de former une butée latérale (31) pour l'envoi postal (P).

18. Appareil selon l'une quelconque des revendications 2 à 17, **caractérisé en ce qu'**il y a au moins une zone (32) relevée à côté d'une collerette de butée (28) pour la position de fermeture du couvercle (27).

19. Appareil selon l'une quelconque des revendications précédentes, **caractérisé en ce que**, sur des parois latérales (6, 7) de la chambre de réception (3), sont formées des parties (53) en V dépassant de ces parois (27) lorsqu'elles sont fermées, pour l'insertion d'un galet d'emballage.

20. Appareil selon l'une quelconque des revendications précédentes, **caractérisé en ce que** la force de ressort des moyens élastiques (24) est conçue de telle manière que la plaque d'appui (10) descend au-dessous du poids de l'envoi postal (P) et **en ce que** la courbe caractéristique de ressort est conçue de telle façon que la plaque d'appui (10) descend au-dessous du poids de l'envoi postal (P) seulement d'un intervalle inférieur à l'épaisseur maximale du type d'envoi concerné qui est autorisée selon le règlement postal.

21. Appareil selon l'une quelconque des revendications précédentes, **caractérisé en ce que** le dispositif de mesure (34) présente des barrières lumineuses (36 à 40) et un repère de mesure (35), le repère de mesure (35) et les barrières lumineuses (36 à 40) pouvant être déplacés de façon réciproque en fonction de l'épaisseur de l'envoi postal (P).

22. Appareil selon la revendication 21, **caractérisé en ce que** les barrières lumineuses (36 à 40) sont disposées dans l'intervalle des épaisseurs maximales autorisées des types d'envoi postal.

23. Appareil selon l'une quelconque des revendications précédentes, **caractérisé en ce que** des capteurs (44) optiques sont disposés sur l'une des parois (10, 27) mobiles les unes par rapport aux autres pour la reconnaissance de format de l'envoi postal (P) respectif.

24. Appareil selon l'une quelconque des revendications précédentes, **caractérisé en ce que**, dans la zone d'une butée latérale (31) de l'envoi postal (P), au moins un autre capteur (52) est disposé sur l'une des parois (10) mobiles les unes par rapport aux autres, afin d'enregistrer l'alignement correct de l'envoi postal (P) sur cette paroi mobile (10).

25. Appareil selon l'une quelconque des revendications précédentes, **caractérisé en ce que** la balance (2), l'appareil de mesure (34) pour l'épaisseur et éventuellement l'interrupteur (30) pour la position de fermeture du couvercle (27) et éventuellement les capteurs optiques (44, 52) pour la reconnaissance du format sont raccordés à une électronique (46 à 50) qui est en liaison avec un clavier d'entrée (46) et un dispositif d'affichage (47) et qui détermine le tarif postal à partir du poids et de l'épaisseur et éventuellement du format de l'envoi postal (P).
